# EUROPEAN PATENT APPLICATION

(11) **EP 1 677 305 A2**
(43) Date of publication of application: **05.07.2006**
(21) Application number: 05257843.2
(22) Date of filing: 20.12.2005
(51) Int. Cl.: G11B 27/24, G11B 21/10, G11B 5/584

(54) **Optical focalizer alignment for magnetic strorage tape**

(30) Priority: 28.12.2004 US 24511
(71) Applicant: QUANTUM CORPORATION, San Jose, CA 95110 (US)
(72) Inventor: Chen, Hong, Shrewsbury, Massachusetts 01545 (US); Stoyanov, Plamen, Milford, Massachusetts 01757 (US); Shen, Yuanhua, Westborough, Massachusetts 01581 (US)
(74) Representative: Charig, Raymond Julian

(57) **Abstract**

Described here are methods and devices for aligning an optical servo system used with digital storage media. The devices and methods described herein include alignment apparatuses and alignment test targets, and methods of using them to align the light source outputs of an optical servo system. The alignment test target may comprise an alignment test tape. The alignment test tape may be used to generate an output signal indicative of optical servo system alignment, and this signal may be used to align the light source outputs of the optical servo system.

## Description

### BACKGROUND

### 1. Field of the Disclosure:

The devices and methods described herein relate to data storage media. In particular, these devices and methods relate to aligning the optical tracking components of data storage devices.

### 2. Background:

Advances in storage of electronic data have resulted in increasingly larger storage capacities and storage densities. As storage capacity expands, reliable data transfer and storage increasingly depends on precise data reading/writing methods, and on devices capable of utilizing higher storage-density formats. For example, digital linear magnetic tape systems commonly utilize multi-head, multi-channel fixed head structures with narrow recording gaps and track widths. Smaller recording heads and track widths allow many linear tracks to be formed on a tape medium within a fixed width. Further, the velocity that digital linear tapes can be driven (e.g., for reading/writing) is also increasing. Thus, increases in storage capacity and read/write time have necessitated the development of methods and devices for ensuring reliable performance.

Head positioning optical servo systems are employed to position a read and/or a write head in a data tape system over a selected track of data. Misalignment of the read/write head with the data track may cause data errors, and the loss or corruption of data on adjacent tracks. One such error is referred to as "lateral tape motion," or LTM. LTM refers to the lateral motion of the tape as it travels across the magnetic recording head. LTM is inherent in mechanical transport systems such as linear magnetic tape systems.

Misalignment of the read/write head may be prevented by using optical servo tracks. Optical servo tracks may be formed on a data tape. For example, optical servo tracks may be located on the "back" side of a magnetic data tape that has a magnetic substrate on the other side. The optical servo tracks are correlated with magnetic tracks on the opposite side of the tape. As the tape passes the read/write head, the optical servo system detects the optical servo tracks on the back of the tape, and keeps the read/write head aligned with the corresponding magnetic track(s) on the other side of the tape. Thus, the optical servo system can correct for LTM.

Precise optical servo tracking may use a focalizer to emit multiple light source outputs (e.g., "beams" or "spots" of light) to detect an optical servo track. Tracking using multiple light source outputs is generally more accurate. Different methods may be implemented to precisely track optical servo tracks using multiple light source outputs, and thereby prevent misalignment of the read/write head. For example, U.S. Patent No. 6,246,535 and U.S. Patent No. 6,768,608 (both to Saliba et al.) describe optical tracking systems in which a focalizer projects multiple (e.g., three) laser light spots onto an optical servo track. Light reflected from these spots indicates the precise location of the optical servo track, thereby aligning the recording (read/write) head on the magnetic side of the tape. U.S. Patent Application No. 09/588,891 by Lee et al. entitled "TRIPLE PUSH-PULL OPTICAL TRACKING SYSTEM" (filed June 7, 2000) also describes a method of precisely tracking optical servo tracks using multiple light source outputs. U.S. Patents Nos. 6,246;535 and 6,768,608 to Saliba et al. and U.S. Patent Application No. 09/588,891 by Lee et al. are herein incorporated by reference in their entirety.

The light source outputs of an optical servo tracking system must be properly aligned with the optical servo tracks for the optical servo system to reliably track. For example, the light source outputs must be separated by some fixed distance for the optical servo system to accurately track and to keep the read/write head aligned with the magnetic track. As the density of the magnetic tracks increases, and therefore the density of the optical servo tracks increase, alignment of the optical servo system becomes increasingly important.

For example, as recording density increases, the track pitch (e.g., the distance between tracks) of data tracks decreases. Thus, the track pitch of optical servo tracks may also decrease, since optical servo tracks may be correlated to data tracks on a data tape. At smaller track pitches, even minute deviations from the optical servo track may cause substantial misalignment of the read/write head, and potential loss of data. Thus, it is critical that the optical servo system be able to precisely track the optical servo tracks, due in part to an increase in this signal to noise ratio.

Furthermore, it may be desirable to provide an optical servo system capable of responding to different optical servo track pitches. An optical servo system that can be realigned to detect different optical servo track pitches may enhance backward-compatibility as recording density increases, and may be used with recording media having different optical servo track pitches (e.g., corresponding to different tape capacities).

Accordingly, there is a need for devices and methods for aligning an optical servo system. In particular, there is a need for devices and methods for aligning the focalizer light beams of an optical servo system. None of the cited prior art suggests the device and methods described and claimed below.

### BRIEF SUMMARY

Described herein are devices and methods of aligning optical servo systems, particularly alignment apparatuses for aligning a plurality of light source outputs of an optical servo system, alignment test targets, and alignment test tapes.

An alignment apparatus for aligning a plurality of light source outputs of an optical servo system may comprise: a comparator for comparing the light from a first light source output and a second light source output; and an adjustor connected to the comparator for adjusting the lateral separation between the first light source output and the second light source output in response to a signal from the comparator. In some versions of the alignment apparatus, the comparator determines a differential signal from the light from the first light source output and the second light source output. The signal from the comparator of the alignment apparatus to the adjustor may be proportional to the differential signal.

In some versions, the alignment apparatus may align more than two light source outputs of an optical servo system. For example, the comparator may compare the light from a first light source output to a third light source output, or to any number of light source outputs. Thus, the adjustor may adjust the distance between a first light source output and a third light source output (or any number of additional light source outputs).

The alignment apparatus may further comprise an initializer that prealigns the first light source output and the second light source output. The initializer may also prealign any number of light source outputs with a first light source output. The initializer may prealign the light source outputs by positioning the light source outputs in approximately the same lateral position.

Also described herein are alignment test tapes for aligning a plurality of light source outputs to detect a servo track on a data storage tape. The alignment test tape comprises: an elongated flexible substrate material having a front surface and a back surface; and at least two alignment tracks on a surface of the alignment test tape. The alignment tracks are separated by an alignment pitch, and the alignment pitch is less than the pitch between a plurality of servo tracks on the data storage tape.

A data storage tape may have a region that is an alignment test tape. For example, the alignment test tape may be the first portion of a data storage tape.

In some versions, the alignment test tape has alignment tracks separated by an alignment pitch at a target distance. The target distance may be approximately equal to the desired separation of the optical servo tracks. For example, the target distance may be approximately 8 *µ*m.

Also described herein are alignment test targets for aligning a plurality of light source outputs to detect a servo track on a data storage tape. The alignment test target comprises at least two alignment tracks, where the alignment tracks are separated by an alignment pitch that is less than the pitch between servo tracks on the data storage tape.

In some versions, the alignment test tape has alignment tracks separated by an alignment pitch at a target distance. The target distance may be approximately equal to the desired separation of the optical servo tracks. For example, the target distance may be approximately 8 *µ*m. Furthermore, the alignment test target may be used as a static target for aligning a plurality of light source outputs.

In some versions, the alignment test target comprises a portion of a magnetic tape.

Also described herein are methods of aligning an optical servo system comprising: emitting at least a first and a second light source output from the optical servo system against an alignment test target, wherein the alignment test target comprises at least two alignment tracks separated by an alignment pitch; comparing the light reflected from the test target by the first and second light source outputs; and adjusting the lateral separation between the first and the second light source outputs until there is no difference between the reflected light from the first light source output and the reflected light from the second light source output.

Another method of aligning an optical servo system further includes a step of prealigning the optical servo system. This method of aligning an optical servo system to detect servo tracks on a data storage tape comprises: emitting at least a first and a second light source output from the optical servo system against an alignment test target; prealigning the optical servo system by setting the first light source output and the second light source output to an initial position, in which the first light source output is at approximately the same lateral position on the alignment test target as the second light source output; comparing the light reflected from the test target by the first and second light source outputs; and adjusting the lateral separation between the first and the second light source outputs away from the initial position until there is no difference between the reflected light from the first light source output and the reflected light from the second light source output. The alignment test target comprises at least two alignment tracks separated by an alignment pitch.

The present invention is better understood upon consideration of the detailed description below in conjunction with the accompanying drawings and claims.

### BRIEF DESCRIPTION OF THE DRAWINGS

**Figure 1** is a schematic view of a read/write head assembly of a linear magnetic tape system.

**Figure 2** is a block diagram of one example of an optical pickup system.

**Figure 3** shows a schematic view of an example of an optical chip portion of an optical pickup as shown in Figure 2.

**Figure 4A** is an example of a digital linear tape having optical servo tracks. **Figure 4B** shows a closer view of a portion the tape from Figure 4A.

**Figure 5A** shows an optical track on a data tape.

**Figure 5B** is one version of an alignment test target, shown as an alignment test tape.

**Figure 5C** is one version of an alignment test target.

**Figure** 6 is a flow diagram describing one version of a method for aligning an optical servo system.

**Figure 7A** shows an example of a method of verifying the alignment of an optical servo system in which the focalizer is laterally scanned at a constant speed.
**Figure 7B** shows a method of verifying the alignment of an optical servo system's focalizer as in Figure 7A, in which the focalizer is laterally scanned at a variable speed. **Figure 7C** shows an example of a portion of an alignment test tape used with the method of aligning the optical servo system shown in Figs. 7A and 7B.

**Figure 8A** shows an exemplary output for three properly aligned light source outputs projected onto a test tape that is not an alignment test tape. **Figure 8B** shows an exemplary output for three light source output beams that are not properly aligned. **Figure 8C** shows an example of a portion of an alignment test tape used generate the signals shown in Figure 8A and 8B.

**Figure 9A** shows an exemplary output for three properly aligned light source outputs projected onto an alignment test tape. **Figure 9B** shows a differential output of two light source outputs when the light source outputs are out of alignment by either 0.1 *µ*m or 0.05 *µ*m. **Figure 9C** shows an example of an alignment test tape used to align the optical servo system shown in Figure 9A and 9B.

### DETAILED DESCRIPTION OF THE INVENTION

Described herein are devices and methods for aligning an optical servo system, particularly devices and methods for aligning the light source outputs of an optical servo system. As used in this specification, an "optical servo system" may be any system for tracking optical servo tracks by emitting and detecting light. The light that is emitted is referred to as "light source outputs." The light source outputs may be projected onto a surface and light from the light source outputs may be reflected by surface features (such as optical tracks) and detected by the optical servo system. An optical servo system may comprise a "focalizer" which includes the light source outputs and coordinates the emission and detection of the light source outputs. An example of an optical servo system comprising a focalizer may be found in U.S. Patent No. 6,246,535 to Saliba, herein incorporated by reference in its entirety.

It should be understood that the devices and methods described and claimed herein are intended for use with any optical servo system. The devices and methods may be used to aligning optical servo systems for any data storage media, including, but not limited to, magnetic tape media (e.g., digital linear tape, etc.), magnetic disk media, optical disk media (e.g., CD ROM, etc.), optical tape media, and the like.

An optical servo system comprises a device that emits one or a plurality of light source outputs. Each light source output comprises a "beam" of light that may form a "spot" on a surface such as the surface of a digital linear tape. Thus, light source outputs may also be referred to as "beams" or "spots," or as "focalizer beams" or "focalizer spots." As used herein, unless the context makes clear otherwise, aligning an optical servo system means that the light source outputs project onto a surface (i.e. a tape surface) in a desired arrangement.

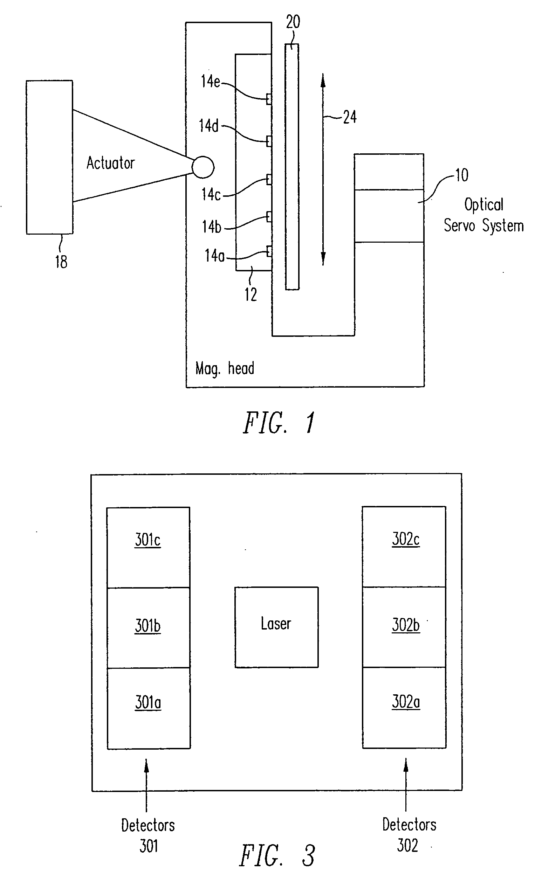

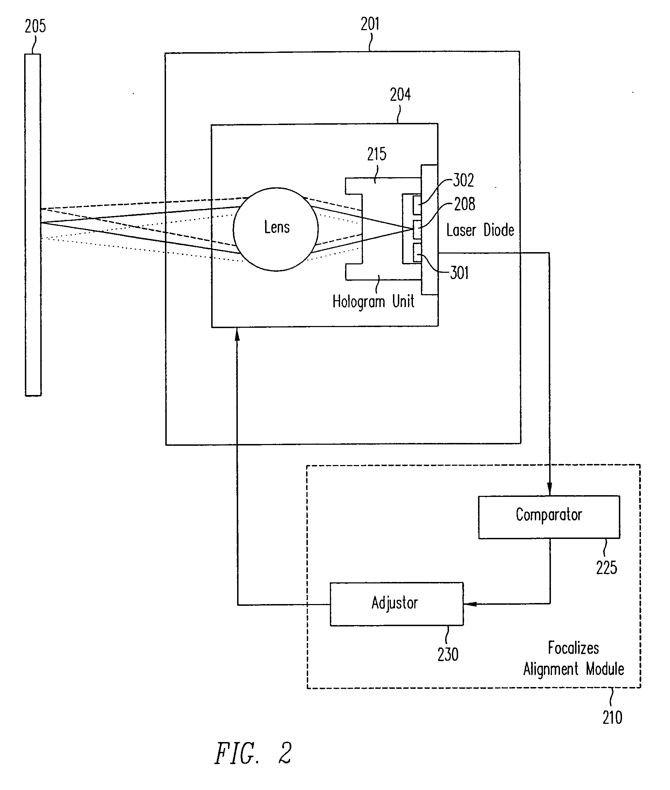

Figure 1 shows a schematic view of a read/write head assembly comprising an optical servo system **10.** The optical servo system **10** is shown opposite a magnetic read/write recording head **12** that has a plurality of individual magnetic heads **14a - 14e.** A head assembly actuator **18** is attached to the read/write head assembly. In operation, a magnetic tape **20** moves across the magnetic recording head **12,** and data tracks may be read off of the magnetic tape by the magnetic heads **(14A -14e).** The optical servo system reads one or more optical servo tracks on the back side of the magnetic tape **20.** The magnetic tape may also be shifted up or down (in the direction shown by the arrow **24)** so that different data tracks may be read. Misalignment caused by undesirable lateral motion of the tape (or the head assembly) may be corrected by the optical servo system that may detect the undesirable motion by tracking an optical servo track on one side of the data tape.

Figure 2 shows a block diagram of an optical servo system **201,** including a focalizer **204,** and a focalizer alignment apparatus **210,** as described below. This focalizer uses a single laser diode **208** to emit a beam of light **212** that is diffracted into three light source outputs using a hologram unit **215.** Although the optical servo system shown in Figure 2 (and other examples described herein) produces three light source outputs, optical servo systems may produce two light source outputs, or may produce more than three light source outputs. The devices and methods described herein may be applied to any optical servo system having two or more light source outputs, regardless of how the light source outputs are generated (e.g., using multiple light sources or by splitting one or more light sources via a hologram unit).

In Figure 2, three light source outputs **221, 222, 223,** project onto a surface **205** (shown as a data tape **20** as in Figure 1). Lights from each light source output are reflected back to the focalizer, where they are detected by detectors **301, 302.** The detectors **301, 302** are shown in Figure 3.

Figure 3 shows a schematic view of the laser diode and detector portion of an optical servo system as shown in Figure 2. The detectors **301** and **302** each have three detector segments **301a - 301c** and **302a - 302c.** These detectors determine the amount of light from each light source output reflected by the surface (e.g., the surface of a data tape). For example, the top two detectors **301a** and **302a** may detect a first light source output **221.** Similarly, the middle pair of detectors **301b** and **302b** may detect a second light source output **222.** The signal resulting from the pairs of detectors may be combined to give the reflectance associated with each light source output.

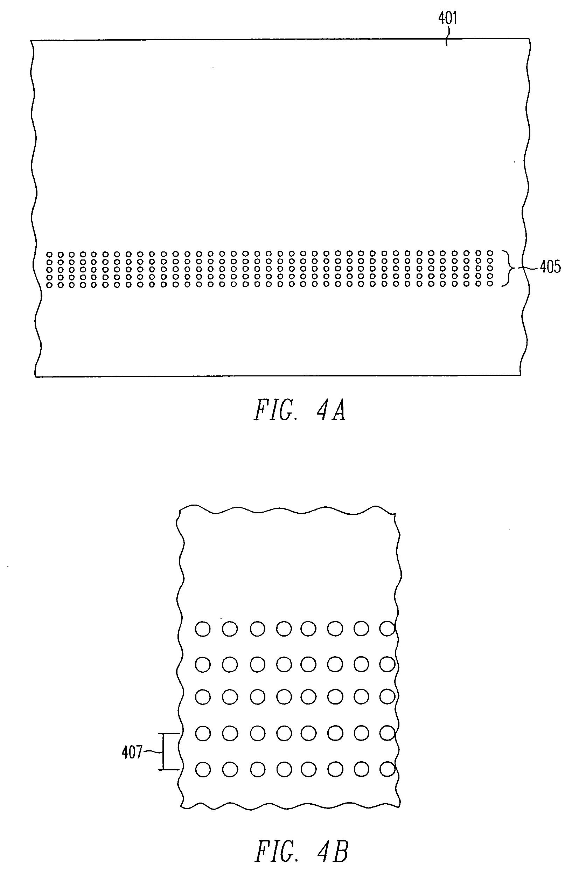

Figure 4 shows one side of a typical digital linear tape **401** having optical servo tracks **405.** Each row of dots corresponds to a track. The servo tracks are shown as rows of "dots," however the track may also be a continuous line or other shape. The rows are separated by an optical servo track pitch **407,** shown in greater detail in Figure 4b. Digital media, such as digital linear tape media, may have a one-to-one relationship between the magnetic track pitch and the optical servo track pitch. For example, present DLT (digital linear tape) media typically has a magnetic track pitch of 24 *µ*m, and an optical servo track pitch of 24 *µ*m. This one-to-one relationship between the data and servo track pitch may be desirable. For example, see U.S. Patent Publication 2003/0035238 by Bellesis et al., herein incorporated by reference in its entirety.

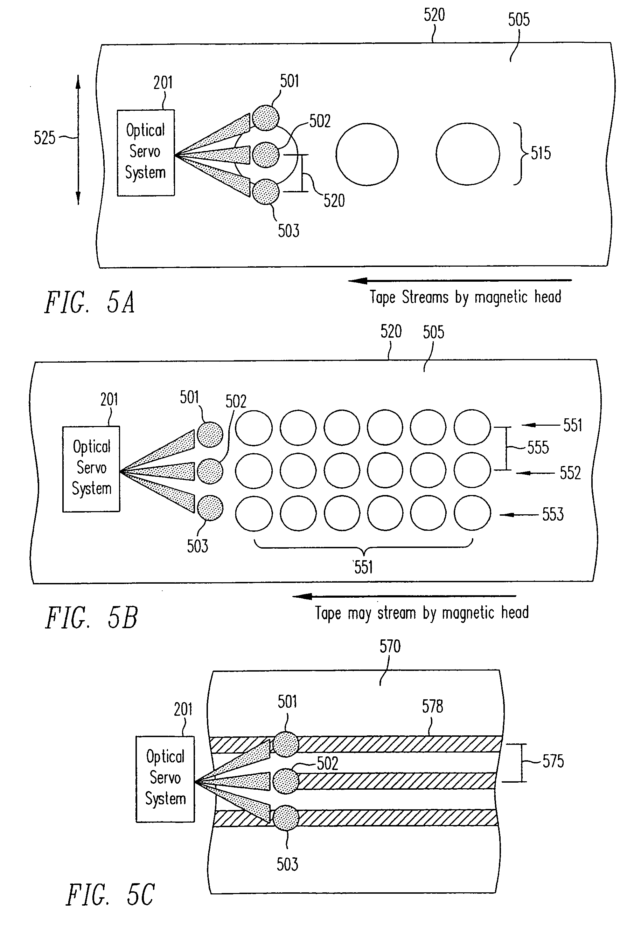

In operation, an optical servo system may use an optical servo track to help align the read/write head. An optical servo system may use multiple light source outputs to track the optical servo track, and therefore keep the data tape and the read/write head in the proper alignment. Figure 5A illustrates one example of optical tracking using multiple light source outputs.

Figure 5A shows an optical servo system **201** emitting three light source outputs (shown as spots **501, 502, 503)** projected onto one side of a linear tape **20** as it streams by a read/write head assembly. The side of the tape **505** facing the optical servo system has an optical servo track **515** comprising a series of marks. The light source outputs **501, 502, 503** are used to track the optical servo track. Because there are a plurality of light source outputs that are spaced some distance apart **520,** the signal detected from the different light source outputs may be used to determine misalignment of the tape. For example, if the optical servo track shifts laterally up or down with respect to the optical servo system, the laterally arranged light source outputs may detect a change as the light source output moves on or off of the servo track. Because the light source outputs are arranged laterally with respect to each other, and because they may be arranged at a known separation distance, the optical servo system may detect the direction and amount of misalignment. For example, U.S. Patent Application No. 09/588,891 by Lee et al. (already incorporated by reference) describes one way that the optical servo system may correct misalignment using three or more light source outputs.

In Figure 5A, the light source outputs are shown arranged laterally and separated by a constant distance ("pitch") **520.** As used herein, unless the context makes clear otherwise, "lateral" refers to the direction of the axis perpendicular to an optical track. In Figure 5A, the lateral direction is shown perpendicular to the long axis of the linear tape, indicated by the arrow **525.** Thus, the lateral separation of light source outputs refers to the distance between the light source outputs on the lateral axis. Light source outputs may be in the same lateral position but still be in different positions in the horizontal axis (perpendicular to the lateral axis **525).**

The descriptions of optical servo systems and focalizers given herein are intended only to illustrate one type of system that may benefit from the alignment apparatuses and the methods of alignment described herein. It should be clear that these methods and devices are not limited to optical servo systems (e.g., focalizers) as described herein, but may be used with any optical servo system.

### Alignment Apparatus

An alignment apparatus, which may also be referred to as a "focalizer alignment apparatus" typically comprises a comparator for comparing the signals generated by individual light source outputs of an optical servo system, and an adjustor, for adjusting the lateral separation between at least some of the light source outputs. The comparator may be connected to the adjustor, so that (during alignment), the adjustor can correctly position the light source outputs of the optical servo system to track one or more optical servo tracks.

Referring back to Figure 2, an alignment apparatus **210** is shown connected to the optical servo system **201.** In particular, a comparator **225** may be connected to the detector portion of the optical servo system **301, 302.** Thus, a comparator may receive signals from the optical servo system indicating the amount of light from each light source output reflected by a target (e.g., a data tape). In some versions, the comparator receives unprocessed signals from the optical servo system (e.g., uncombined detector information such as signals from individual detector segments, **301 a-c** and **302a-c),** or may receive signals that have already been processed to some degree (for example, combined, averaged, filtered, or otherwise processed signals). In some versions, the comparator generates a differential (e.g., subtracted) signal, based on signals from at least two of the light source outputs detected by the optical servo system. In one version, the comparator uses electrical signals (e.g., photoelectric signals) from the optical servo system.

The comparator may also analyze signals from the light source outputs to determine spacing and distance between two or more light source outputs. In some versions, the comparator further comprises a memory. In some versions, the comparator may refer to a change in a light source output over time, or a change in the difference between light source outputs over time. The comparator may be a dedicated device (e.g., an electrical circuit), or it may be a software-based algorithm that runs on hardware shared by other resources, or it may be some combination thereof.

The comparator may also provide an output signal to the adjustor. In some versions, the output signal may be selected from a limited instruction set. For example, the comparator may tell the adjustor which light source outputs to adjust (e.g., individual light source outputs, or all light source outputs, or a subset of the light source output). The comparator may tell the adjustor how much to adjust a light source output (e.g., how far to move a light source outputs). The comparator may tell the adjustor which direction to adjust the light source (e.g., to increase or decrease the separation between the light source outputs). The comparator may tell the adjustor or how long to continue adjusting the light source outputs (e.g., the adjustments may be in pre-set increments, or may continue based on "start" and/or "stop" commands from the comparator). In some versions, the comparator controls the adjustor, and may further comprise a controller.

The comparator may also receive input from a user, from other components of the optical servo system or the read/write head assembly, or from the adjustor. For example, the adjustor may provide feedback to the comparator (e.g., telling the comparator the status of the adjustor, etc.).

Figure 2 also shows an adjustor receiving input from a comparator. In general, an adjustor may change the alignment of the optical servo system by changing the lateral separation between at least two light source outputs. The adjustor may comprise any means of changing the lateral separation between at least two light source outputs including manual and automatic means. The adjustor may comprise an actuator for moving the optical servo system (or a component of the optical servo system, including a focalizer) so that the adjustor may change the lateral separation between light source outputs by moving the entire optical servo system or a component of the optical servo system. The adjustor may move light source outputs individually.

In some versions, the adjustor adjusts the spacing of all of the light source outputs synchronously. For example, the light source outputs may be generated from a single laser diode, as shown in Figures 2 and 3, that is split into multiple light source outputs. The spacing between the light source outputs may thus depend on the angle (or angles) of refraction through the optical servo system. In some versions, the adjustor may change the refraction angle of the focalizer system to increase or decrease the lateral separation distance between light source outputs (e.g., by shifting a lens component, or by adding additional optical components into the pathway of the light source outputs). In some versions, the adjustor may rotate the entire focalizer to change the apparent separation between the light source outputs (e.g., the spots shown in Figure 5A). Rotating the focalizer (or the optical servo system) may not change the absolute separation between the focalizer spots, but it may change the lateral separation **525.**

In some versions, the adjustor adjusts the spacing between pairs of light source outputs individually, or in groups. For example, the adjustor may change the direction of light from an individual light source output by changing the path through the optical servo system (e.g., by using an additional optical component, or by selectively altering an existing optical component). In some versions, one or a subset of light source outputs are produced by a separate light source (e.g., laser diode) that may be adjusted by the adjustor.

In some versions, particularly those that shift the light path of all or some of the light source outputs, the light source output detectors of the optical servo system may also be adjusted when the light source output is adjusted. In some versions, the adjustor adjusts the position of the light source output detector or adjusts the light path so that the light source outputs will still be detected by the detectors if the adjustor changes the light path and/or angle of refraction of a light source output. In some versions, the adjustor may also adjust the focal length of one or more of the light source outputs.

As described above, the adjustor may receive input and/or instructions from a comparator. An adjustor may also receive input and/or instructions from other outside sources. For example, the adjustor may receive instructions from an initializer.

An alignment apparatus may also comprise an initializer for prealigning the light source outputs of the optical servo system. In some versions, the light source outputs of the optical servo system require adjustment in situations where it is not clear if the light source outputs will need to be moved closer together laterally, or further apart laterally. Thus, alignment of the optical servo system may benefit by using an initializer configured to prealign the light source output to a predetermined position before continuing with further alignment. For example, an initializer may set the light source outputs to the same lateral position so that alignment can proceed by moving the light source outputs apart until the optical servo system is properly aligned.

The initializer may comprise a dedicated component (e.g., hardware and/or instructions to run on the hardware) or it may be included with another portion of the optical servo mechanism or alignment apparatus. For example, in some versions, the comparator comprises an initializer that first instructs the adjustor to prealign the light source outputs. In some versions, the initializer is part of the adjustor.

In some versions, the initializer instructs the adjustor to move the light source outputs to a default pre-set position. For example, the initializer may cause the light source outputs to be spaced approximately 8 µm apart laterally. In some versions, the initializer may cause the light source outputs to be spaced a minimum lateral separation distance apart (e.g., the light source outputs may be spaced so that they are in nearly the same lateral position).

An alignment apparatus (or a component of an alignment apparatus, such as a comparator or an adjustor) may also include a controller for detecting and controlling when to begin and/or when to stop aligning an optical servo system.
Thus, a controller may receive a signal instructing an alignment apparatus to begin aligning the optical servo system. In some versions, a controller may be configured to receive instructions from a user or from an electronic device. In some versions, the controller may receive instructions from the read/write head; for example, the read/write head may detect when an alignment test target or alignment test tape is present, and thereafter activate the alignment apparatus.

In some versions, the alignment apparatus is integrated into a read/write head assembly. For example the alignment apparatus may comprise a permanent part of a read/write head assembly so that the optical servo system may be aligned at any time during the lifetime of the device. In some versions, the alignment apparatus, or a portion of the alignment apparatus, is removable from the read/write head assembly. For example, the alignment apparatus may align the optical servo system only during manufacture of the read/write head assembly, or manufacture of a device incorporating the read/write head assembly. For example, the comparator may be removable and may interface with the optical servo system only during alignment. In some versions, the adjustor may remain part of the read/write head assembly even when the comparator portion is removed.

### Alignment Test Target

An alignment test target may be used to align the optical servo system, particularly in conjunction with an alignment apparatus. Figure 5B and 5C show examples of alignment test targets that may be used with an alignment apparatus to align the light source outputs of an optical servo system. In Figure 5B, the alignment test target is an alignment test tape that may be streamed through the read/write head assembly during alignment. Figure 5C shows one version of an alignment test target that does not require the test target to move during alignment.

In general, alignment test targets provide a plurality (two or more) of alignment tracks that are separated by an alignment pitch. The alignment pitch is the approximate separation that is desired between two or more of the light source outputs. The separation between the alignment tracks may determine the alignment of the light source outputs. For example, if it is desirable to separate the light source outputs by 8 µm, the alignment track pitch may be set to 8 µm, or a multiple of 8 µm, as described below. Separation between tracks is typically measured from the center of the track to the center of a second track, measured in the same lateral axis, unless the context makes it clear that the measurement should be made differently (e.g., from outer edge to outer edge or measured in an x,y plane rather than the lateral axis). Similarly, separation between light source outputs may be measured from the lateral center of a first light source output to the lateral center of a second light source output, unless the context makes it clear otherwise. The light source output separation is usually measured on the surface of the target media (or test target) onto which the light source outputs project.

The alignment pitch is typically less than the optical track pitch, particularly in embodiments of the optical tracking system in which multiple light source outputs are used to track a single optical servo track (as shown in Figure 5A). In some versions, the alignment pitch is a fraction of the optical servo track pitch. In some versions, the alignment pitch is a function of the light source output size (e.g., the "spot size") and/or the number of light source outputs.

Figure 5B shows one example of an alignment test target with three alignment tracks that are separated by an alignment pitch. An alignment track may comprise a continuous track (e.g., a line), or the track may comprise a discrete mark or series of marks. In one version, the alignment track may comprise a single mark. The alignment track may comprise a mark on a surface of the alignment test target surface, or it may comprise a surface feature or void in, or on, the surface of the alignment test target. For example, U.S. Patents No. 6,741,415 and 6,771,450 to Okuda et al. describe methods of writing servo tracks using laser light. In general, alignment tracks may comprise any contrasting region which can be detected by the optical servo system detectors.

In Figure 5B, each light source output **501, 502, 503** has a corresponding alignment track **551, 552, 553.** The three alignment tracks shown are separated by an alignment track pitch **555.** Generally this alignment track pitch is the same between all of the alignment tracks; however it may be desirable to separate alignment tracks by different distances.

In some versions, there may be fewer alignment tracks than light source outputs. In one version, an alignment test target has two alignment tracks that are separated by an alignment track pitch equal to the desired distance between any two of the light source outputs. This version of the alignment test target works particularly well when the light source outputs of the optical servo system move as a unit, automatically maintaining approximately equal separation between the light source outputs. For example, the optical servo system may be aligned using only the outer two light source outputs. Thus, an alignment test target may comprise two alignment tracks separated by an alignment track pitch equal to the desired lateral separation between the outermost light source outputs. To give a numeric example, if the optical servo system comprises a focalizer having three light source outputs, and the optical servo track pitch is 24 µm, and the spot size of the light source output is 4 µm, it may be desirable to separate the light source outputs by 8 µm. Thus, the pitch between the light source outputs is 8 µm. In this example, the alignment test target has two alignment tracks separated by a track pitch of 16 µm (twice 8 µm).

The alignment test target in Figure 5B is shown as part of an alignment test tape. Thus, the optical servo system may be aligned when the alignment test tape is being run through the read/write head assembly. Alternatively, the optical servo system may be aligned when the test tape is kept still in the read/write head assembly, since the alignment apparatus and method of alignment may work on a static test target or a moving one. Alignment test tapes may be formed onto any suitable substrate. Flexible materials are particularly suitable, including polymeric materials. In one version, the alignment test tape comprises an elongated, continuous web of flexible substrate material having a front surface and a back surface. The back surface may be configured to face the optical servo system so that the surface may be scanned by the light source outputs of the optical servo system.

In some versions, the alignment test target is part of another alignment test tape, e.g., an alignment test tape used to align the optical servo system with respect to the magnetic servo system as described in U.S. Patent No. 6,480,351 to Leonhardt et al., U.S. Patent No. 6,493,174 to Stubbs, and U.S. Patent Application No. 2003/0035238 to Bellesis et al., each of which is herein incorporated by reference in its entirety. In some versions, the alignment test target is part of a data storage media. For example, a magnetic tape may comprise a leader region including an alignment test target that may be used to align the optical servo system before using the magnetic tape.

Figure 5C shows an alignment test target **570** comprising three alignment tracks **578, 579, 580** shown as continuous lines, separated by a constant track pitch **575.** Unlike Figure 5B, the test target is not a data tape, but may be a separate component, e.g., an insert placed in the read/write head assembly to align the optical servo system. Once the light source outputs of the optical servo system are aligned using the alignment test target, the light source outputs may be secured in position, and the alignment test target can be removed. The read/write head assembly (or a device incorporating it) can then be further aligned, or used to read/write data to a data storage media.

### Methods of Using the Alignment Apparatus

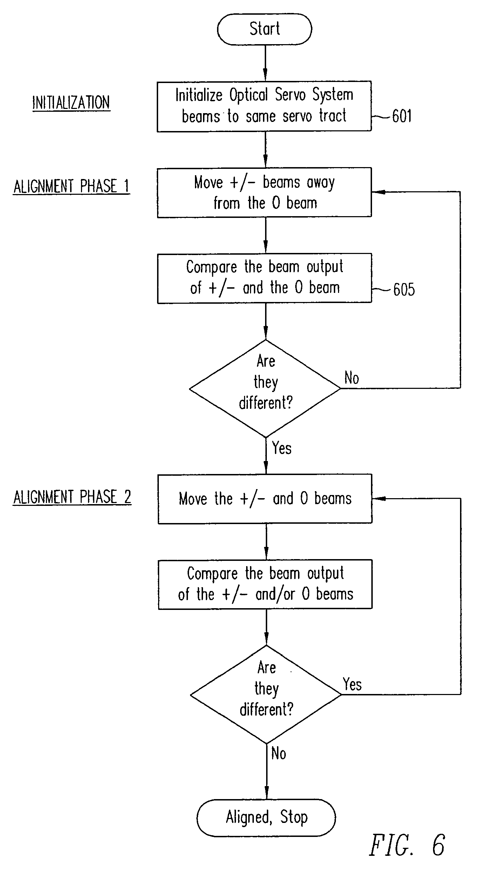

An optical servo system may be aligned using a comparator, an adjustor, and an alignment test target by comparing the signals reflected from two or more light source outputs that are directed towards the alignment test target. The light source outputs may be systematically moved until the signals match. Figure 6 is a flowchart illustrates a method for aligning an optical servo system having three light source outputs (called +, 0, and -), using an alignment test target having three alignment tracks (one corresponding to each of the light source outputs). The alignment tracks on the alignment test target are separated by a pitch equal to the intended alignment separation of the light source output (e.g., 8 *µ*m, 4 *µ*m, etc.)

In some versions of the alignment method described herein, the light source outputs of the optical servo system may start in any initial position. The alignment method described herein emphasizes the lateral position of the light output sources, because it is the lateral position that is critical to the functioning of conventional optical servo tracking systems. Most optical tracking systems follow optical servo tracks that are arranged horizontally in order to reduce or eliminate the effect of lateral misalignment, or to assist in lateral alignment. However, the methods and devices described herein may also be adapted to use with systems in which both lateral and horizontal (e.g., x, y) or even three-dimensional positional alignment is desired.

In Figure 6, alignment of the optical servo system begins by initializing the alignment, by moving the light source outputs to a known starting position **601.** Initialization may set one of the light source outputs (e.g., a reference light source output) to a starting position, and/or initialization may set all of the light source outputs to an initial starting position relative to the alignment test target.
Initialization may be accomplished by invoking an initializer, as described above.

The initializer may set the location of a reference light source output. In one version, the initializer moves at least one light source output (the reference light source output) so that it is at least partly over an alignment track. When there are an odd number of light source outputs, as here, it may be preferable to have a center light source output ("0") be the reference light source output. In some versions, the reference light source output is centered over an alignment track. In some versions, the reference light source output is positioned over a central alignment track. In some versions, it may not be necessary to prealign the reference light source output over an alignment track.

The initializer may set all of the light source outputs into a known starting position. For example, when the alignment track pitch is not known, it may be beneficial to begin alignment by setting all of the light source outputs of an optical servo system so that the light source outputs are separated by a distance smaller than the smallest possible alignment track pitch. In one version, this means instructing the adjustor to move the light source outputs so that they are all in the same lateral position (e.g., in the same lateral position as the reference light source output, if one is used). Thus, in some versions, the adjustor rotates the focalizer portion of the optical servo system so that all of the light source outputs are in the same lateral position (e.g., arranged horizontally). In other versions, the adjustor may move the light source outputs to some other preset location (e.g., maximally separated, etc.).

Once the light source outputs are moved to an initial location, the alignment apparatus may begin aligning the light source outputs. Alignment is accomplished by comparing the signals from two or more detectors detecting light reflected by two or more light source outputs **605.** One of these detectors may be a "reference" light source output, 0. Typically, the reference light source output is not moved with respect to other light source outputs during this first alignment phase. In Figure 6, the comparator compares the output of the reference light source output (0) with one or more other light source outputs (+ and/or -). When the light source outputs were initially set to the same lateral position during initialization, the light source outputs will initially be the same. Thus during this first phase, the adjustor moves the light source output (or outputs) away from the reference light source output, until the comparator indicates that there are differences in the signals between the reference light source output and one or more of the other light source outputs. For example, the light source outputs + and - are initially moved off of the alignment track that the reference light source, 0, remains on and detects.

Once the + and - light source outputs have moved off of the alignment track (typically in different lateral directions away from the reference light source output), the second phase of alignment compares the signals to determine when the + and/or - light source outputs have aligned with another alignment track on the alignment test target. During this second phase **607,** the adjustor continues moving the + and - light source output spots away from the reference light source output, 0, while continuously comparing the signal from the reference light source output to the other light source outputs. In some versions, the + and - light source outputs are synchronously moved by the adjustor so that they may both align with their respective alignment tracks on the alignment target at the same time. Alignment is detected once the comparator does not detect any difference between the signal from the reference light source output and the + and/or - light source output.

Additional alignment steps may also be undertaken, such as fine alignment. For example, the optical servo system may benefit from fine alignment adjustments after using an alignment procedure such as the one described above if the pitch of the alignment track is greater than the spot size of the light source outputs, for example. Fine alignment may be perfonned by laterally shifting the light output sources in small increments, comparing the reflected signals, and continuing to adjust them until they are all equal. For example, all of the light source outputs may be positioned at the upper edge of each alignment track corresponding to each light source output.

There are many alternative alignment methods that may be used to align an optical servo system using the alignment apparatus and an alignment test target. For example, an optical servo system may be aligned without prealigning the light source outputs of the optical servo system, particularly if the light source outputs are already roughly aligned. In one version, an optical servo system is aligned without using a reference light source output, or by sequentially altering the reference light source outputs as individual light source outputs align with corresponding alignment tracks on an alignment test target.

Additional examples using an alignment apparatus and an alignment test target are described in the following non-limiting examples.

### Examples

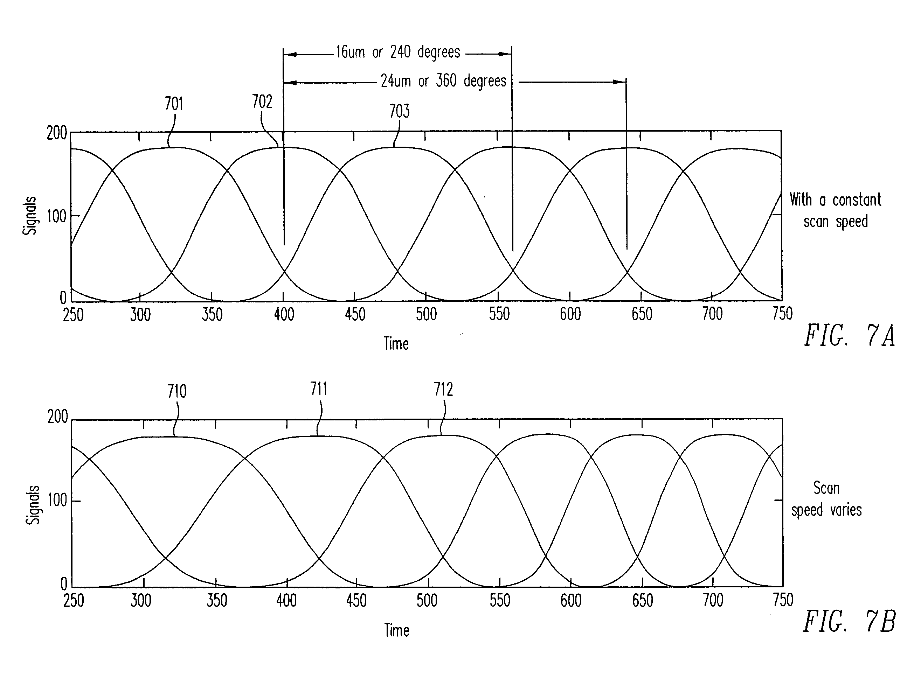

Figure 7A and 7B illustrate a lateral scanning method of testing alignment that does not use an alignment test tape as describe above. The optical servo system of Figure 7A and 7B has three light source outputs emanating from a focalizer.
Figure 7A shows the output of the three light source outputs ("beams") when they are properly aligned so that the distance between the light source outputs is equal at 8 µm. The output signal showing this alignment is generated by scanning a test tape comprising servo tracks (e.g., servo tracks written at a track pitch **725** of 24 µm, as shown in Figure 7C) through the read/write head assembly, and moving the optical servo system (or at least the focalizer) laterally relative to the running tape. Signal outputs from each of the light source outputs are measured **701, 702, 703.** When the focalizer is moved at a constant speed relative to the running tape, the phases of the three output signals may be compared to determine if the focalizer beams are aligned. An equal distance between each of the signal peaks indicates that the three beams are accurately aligned (equally spaced).

In Figure 7A, the phases of the three beams **701,702, 703** are all equally separated, showing that the focalizer beams (the light source output beams of the optical servo system) are aligned. However, this method may be difficult to use, particularly for correcting, rather than just analyzing, alignment of the focalizer beams. For example, when the lateral scanning speed is not kept constant, the phase between the focalizer beam outputs will vary, reflecting the constant phase, potentially reducing accuracy. An example of the phase shift due to a change in scanning speed is illustrated in Figure 7B, showing three focalizer beam outputs **710, 711, 712.** Although the beams may be properly aligned, a sleight variation in scanning speed may result in a false determination of misalignment.

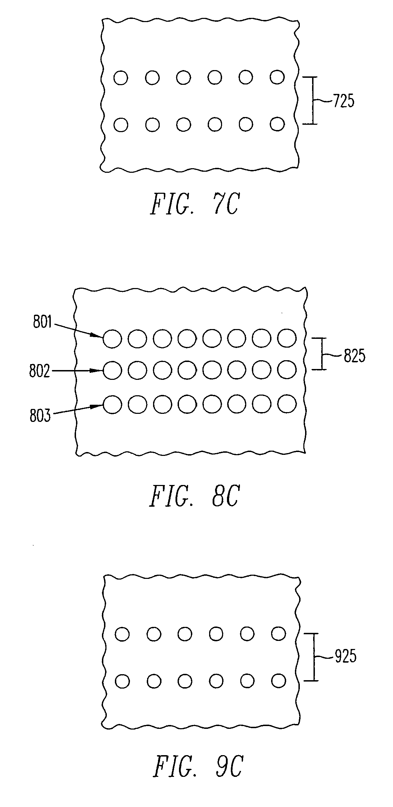

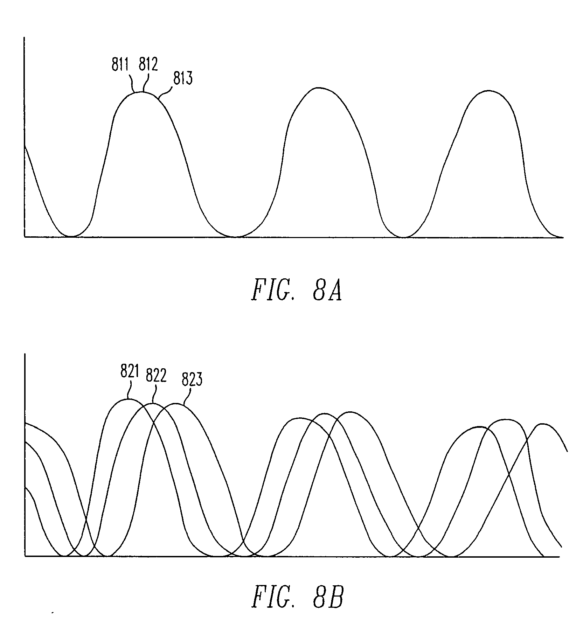

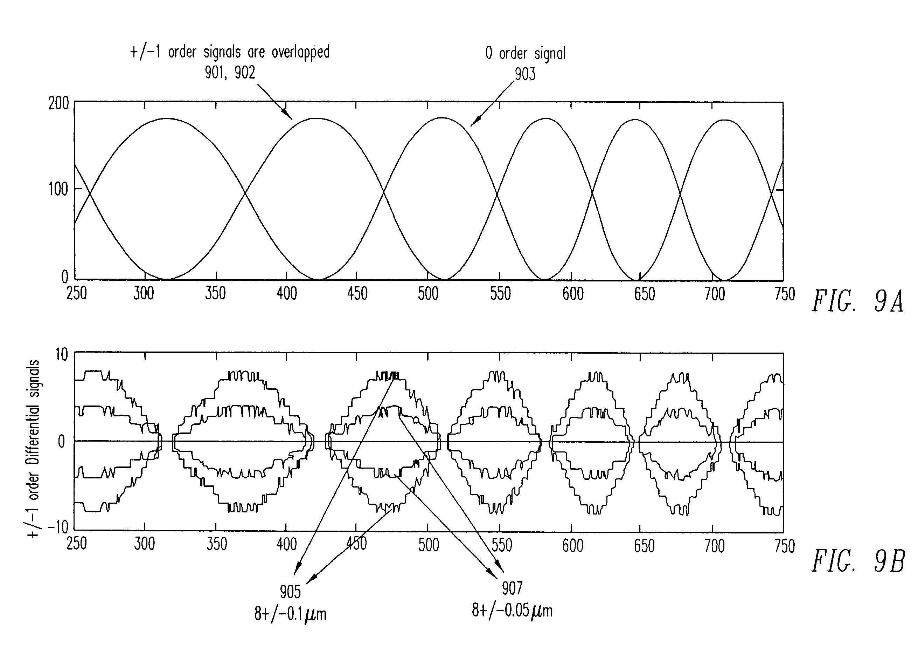

Figure 8A - 8C illustrates an alignment method using an alignment test tape. An example of the alignment test tape is shown in Figure 8C, which shows three alignment tracks **801, 802, 803** separated by an alignment track pitch **825** that is equal to the desired separation between the light source outputs of the optical servo system. When the optical servo system is scanned laterally over the alignment test tape as the alignment test tape is run through the read/write head assembly, each light source output generates a signal as shown in Figure 9A. In Figure 9A, the three focalizer beams are properly aligned to the same pitch as the alignment track pitch **825.** Thus, when the focalizer is laterally scanned across the alignment test tape, the three output signals **811, 812, 813** all have identical phases and overlap, as shown. This relationship is independent of the rate at which the focalizer is scanned across the alignment test tape.

In Figure 8B, the focalizer beams (light source output beams) are not aligned to the same pitch as the alignment test tape. Thus, when the focalizer is scanned across the test tape, the output signals **821, 822, 823** of the focalizer beams are out of phase, and thus the individual outputs may be different at different times. The optical servo system may be aligned by adjusting the position of the light source output beans with respect to each other until the phases are identical, as shown in Figure 8A.

Figures 9A and 9B illustrate another alignment method for aligning three light source outputs using an alignment test tape having only two (rather than three or more) alignment tracks. An example of the alignment test tape is shown in Figure 9C, which shows three alignment tracks separated by a track pitch **925** that is approximately twice the separation desired between each light source output. In Figure 9A, when the focalizer is scanned across the alignment test tape, two of the three light source outputs (the + and the - light source outputs) are in phase, shown as a single curve **901, 902.** In contrast, the middle light source output (the "0" beam) is out of phase **903.** In at least some versions of the focalizer and optical servo system, the separation of the light source outputs are all adjusted together, so that the spacing between the beams is always equal, and may be increased or decreased as a group. In these versions, the optical servo system may be adjusted by altering the separation between the light source outputs until at least two of the light source outputs are in phase, as shown in Figure 9A.

When aligning the light source outputs, the closer the light source outputs are to alignment, the smaller the overall difference between the two signals. This is illustrated in Figure 9B. Figure 9B shows the difference between the + and the - light source outputs as they approach closer to alignment. In Figure 9A - 9C, the aligned light source outputs are supposed to be 8 *µ*m apart. Thus, the alignment pitch of the alignment track is 16 *µ*m (twice this distance). Figure 9B shows the difference between the + and the - light source outputs when they are out of alignment by 0.1 µm **905,** and 0.05 µm **907.** As the focalizer is scanned over the alignment target tape, this greater difference in separation results in a greater differential signal. Thus, in some versions of the methods and devices for aligning the optical servo system, the signal from the comparator to the adjustor may be proportional to the magnitude of the difference between the signals generated by the reflection of light from the light source outputs.

The above detailed description is provided to illustrate various examples and is not intended to be limiting. It will be apparent to those of ordinary skill in the art that numerous modification and variations within the scope of the present invention are possible. For example, various examples described herein may be combined and altered. Further, numerous other devices and processes not explicitly described herein may be used with the exemplary storage device holders and extensible supports described, as will be recognized by those of ordinary skill in the art. Additionally, within the description, particular examples have been discussed and how these examples are thought to address certain disadvantages in related art. This discussion is not meant, however, to restrict the various examples to methods and/or systems that actually address or solve the disadvantages. Accordingly, the present invention is defined by the appended claims and should not be limited by the description herein.

## Claims

1. An alignment apparatus for aligning a plurality of light source outputs of an optical servo system, the alignment apparatus comprising:
a comparator for comparing the light from a first light source output and a second light source output; and
an adjustor connected to the comparator for adjusting the lateral separation between the first light source output and the second light source output in response to a signal from the comparator.

2. The alignment apparatus of claim 1, wherein the comparator determines a differential signal from the light from the first light source output and the second light source output.

3. The alignment apparatus of claim 2, wherein the signal from the comparator to the adjustor is proportional to the differential signal.

4. The alignment apparatus of claim 1, wherein the comparator compares the light from a first light source output to a third light source output.

5. The alignment apparatus of claim 4, wherein the adjustor adjusts the distance between the first light source output and the third light source output.

6. The alignment apparatus of claim 1, further comprising an initializer, wherein the initializer prealigns the first light source output and the second light source output.

7. The alignment apparatus of claim 6, wherein the initializer prealigns the light source outputs by positioning the light source outputs in approximately the same lateral position.

8. An alignment test tape for aligning a plurality of light source outputs to detect a servo track on a data storage tape, the alignment test tape comprising:
an elongated flexible substrate material having a front surface and a back surface; and
at least two alignment tracks on a surface of the alignment test tape, wherein the alignment tracks are separated by an alignment pitch, and further wherein the alignment pitch is less than the pitch between a plurality of servo tracks on the data storage tape.

9. The alignment test tape of claim 8, wherein the alignment test tape comprises a portion of a data storage tape.

10. The alignment test tape of claim 8, wherein the alignment pitch comprises a target distance.

11. The alignment test tape of claim 10, wherein the target distance is approximately 8 µm.

12. An alignment test target for aligning a plurality of light source outputs to detect a servo track on a data storage tape, the alignment test target comprising:
at least two alignment tracks, wherein the alignment tracks are separated by an alignment pitch, further wherein the alignment pitch is less than the pitch between servo tracks on the data storage tape.

13. The alignment test target of claim 12, wherein the pitch of the alignment track is equal to a target distance.

14. The alignment test target of claim 13, wherein the target distance is approximately 8 µm,

15. The alignment test target of claim 12, for use as a static target for aligning a plurality of light source outputs.

16. The test target of claim 12, wherein the alignment test target comprises a portion of a magnetic tape.

17. A method of aligning an optical servo system comprising:
emitting at least a first and a second light source output from the optical servo system against an alignment test target, wherein the alignment test target comprises at least two alignment tracks separated by an alignment pitch;
comparing the light reflected from the test target by the first and second light source outputs; and
adjusting the lateral separation between the first and the second light source outputs until there is no difference between the reflected light from the first light source output and the reflected light from the second light source output.

18. A method of aligning an optical servo system to detect servo tracks on a data storage tape, the method comprising:
emitting at least a first and a second light source output from the optical servo system against an alignment test target, wherein the alignment test target comprises at least two alignment tracks separated by an alignment pitch;
prealigning the optical servo system by setting the first light source output and the second light source output to an initial position, in which the first light source output is at approximately the same lateral position on the alignment test target as the second light source output;
comparing the light reflected from the test target by the first and second light source outputs; and
adjusting the lateral separation between the first and the second light source outputs away from the initial position until there is no difference between the reflected light from the first light source output and the reflected light from the second light source output.
